# EUROPÄISCHE PATENTSCHRIFT

(11) **EP 1 154 956 B1**
(45) Veröffentlichungstag und Bekanntmachung des Hinweises auf die Patenterteilung: **25.09.2002**
(21) Anmeldenummer: 00912479.3
(22) Anmeldetag: 18.02.2000
(51) Int. Cl.: C02F 3/34, C02F 3/28, B09C 1/00

(54) **VERFAHREN ZUR MIKROBIELLEN SANIERUNG VON SCHWEFELSAUREN BERGBAURESTSEEN**
METHOD FOR MICROBIALLY CLEANING UP SULPHURIC-ACID RESIDUAL MINING POOLS
PROCEDE D'ASSAINISSEMENT MICROBIEN DES EAUX RESIDUELLES PROVENANT DES MINES CONTENANT DE L'ACIDE SULFURIQUE

(30) Priorität: 18.02.1999 DE 19907002
(43) Veröffentlichungstag der Anmeldung: 21.11.2001
(73) Patentinhaber: UFZ-UMWELTFORSCHUNGSZENTRUM Leipzig-Halle GmbH, 04318 Leipzig (DE)
(72) Erfinder: FROEMMICHEN, René, D-39106 Magdeburg (DE); WENDT-POTTHOFF, Katrin, D-38110 Braunschweig (DE); FRIESE, Kurt, D-33824 Werther (DE); KLAPPER, Helmut, D-39126 Magdeburg (DE)
(74) Vertreter: Ziebig, Marlene, Dr. Dipl.-Chem.
(86) Internationale Anmeldenummer: EP0001329
(87) Internationale Veröffentlichungsnummer: WO00048949

(56) Entgegenhaltungen:
- DE-A- 4 106 781
- DE-A- 19 820 320
- DE-U- 29 703 424
- US-A- 5 833 855
- PATENT ABSTRACTS OF JAPAN vol. 013, no. 105 (C-575), 13. März 1989 (1989-03-13) & JP 63 278592 A (DOWA KOEI KK), 16. November 1988 (1988-11-16)

## Beschreibung

Die Erfindung betrifft ein in situ-Verfahren zur Neutralisierung sowie Entfernung von Sulfat, Eisen und anderen Schwermetallen in sauren Tagebaurestseen des Braunkohlenbergbaus.

In vielen Seen, die aus der Hinterlassenschaft des Braunkohlentagebaus stammen, findet sich eine sehr schlechte Wasserqualität mit niedrigen pH-Werten und hohen Eisen- und Sulfatgehalten. Diese- chemische Zusammensetzung ist ein besonderes Charakteristikum der Braunkohlefolgelandschaft. In vielen Abbaurevieren kommt das Eisensulfidmineral Pyrit bzw. Markasit (beide chemisch FeS₂, aber unterschiedliche Kristalltruktur) in den Kohlebegleitgesteinen vor. Durch die Grundwasserabsenkung und den Tagebaubetrieb wurden diese Minerale an der Luft oxidiert (verwittert). Die Pyritoxidation ist der stärkste säurebildende Prozess in der Natur. Kommen die Verwitterungsprodukte mit Wasser zusammen, z. B. bei einem Wiederanstieg des Grundwassers nach Einstellung des Pumpenbetriebes am Ende des Tagebaubetriebes, so bildet sich ein schwefelsaures Gewässer. Um diese Gewässer in das wasserwirtschaftliche Gesamtsystem mit aufnehmen zu können, d. h. auch an Flüsse anbinden zu können, wird zuvor eine Sanierung (Anhebung des pH-Wertes bis auf mindestens 6) notwendig. Auch eine Nutzung z. B. als Badegewässer setzt nach der euorpäischen Badewasserrichtlinie einen pH-Wert von größer 6 voraus.

Diese Problematik ist neben Deutschland auch für die Tschechische Republik, Polen, Australien und die USA (s. für die USA auch Miller GC Lyons WB & Davis A 1996 Understanding the water quality of pit lakes. Env. Sci. Tech. 30; 118A-123A) von Bedeutung.

Gegenwärtig gibt es noch kein funktionierendes Verfahren zur Sanierung eines sauren Bergbaurestsees. Dies spiegelt auch der kürzlich erschienene Überblicksbeitrag von Robbins EI 1998 "Historical overview and future directions of the microbial role in the acidic coal mine drainage system. Proceedings of 25^{th} Anniversary and 15^{th} Annual National Meeting of the American Society for Surface Mining and Reclamation, May, 17-21, St. Louis, Missouri" wieder.

So wurden zwar in der internationalen Literatur Versuche beschrieben, die bakterielle Sulfatreduktion zur Sanierung von Restseen des Braunkohlentagebaus einzusetzen. Dies basiert darauf, daß unter anoxischen Bedingungen (d. h. kein freier Sauerstoff vorhanden) bestimmte Bakterien in der Lage sind, 3-wertiges Eisen und Sulfat zu 2-wertigem Eisen bzw. Sulfid (S²⁻) zu reduzieren. Die beiden neu gebildeten reduzierten Formen (Fe²⁺ und S²⁻) können unter geeigneten pH- und Redoxbedingungen Eisensulfid oder Pyrit (FeS, FeS₂) bilden. Der Vorgang der Pyritverwitterung, der zur Versauerung geführt hat, wäre damit umgekehrt und Eisen und Schwefel im Sediment dauerhaft festgelegt.

Die Bakterien, die diese Vorgänge beschleunigen, gewinnen die für ihren Stoffwechsel benötigte Energie aus organischen Kohlenstoffquellen (Substrat). Nicht jede organische Kohlenstoffquelle ist aber für die eisenreduzierenden Bakterien (FeRB) und Sulfatreduzierenden Bakterien (SRB) verwertbar und nicht jedes Substrat wird vollständig bis zu CO₂ abgebaut. Dieser vollständige Abbau ist aber notwendig, um dem System Alkalität zuzuführen und damit den pH-Wert anzuheben.

Die bakteriellen Vorgänge sind aufgrund einer Vielzahl gleichzeitig ablaufender und miteinander konkurrierender Stoffwechselprozesse hochkomplex und führen über viele Zwischenstufen zu den gewünschten Endprodukten. Obwohl die grundlegenden Zusammenhänge seit ca. 40 Jahren bekannt sind, sind doch noch lange nicht alle Zwischenreaktionen verstanden und unter Umständen auch noch nicht bekannt.

Bisherige Anwendungen fanden überwiegend in Laborreaktoren, Pilotanlagen, Wetlands oder Durchflußreaktoren statt. So beschreiben beispielsweise Christensen et al. in Water Res. 30(7): 1617-1624, 1996 Versuche mit Molke und Gülle als Substrate und erzielten erhöhte pH-Werte. Aber die Eisen- und Sulfatkonzentration im Wasser konnte nicht gesenkt werden, obwohl die Versuche unter Luftabschluß durchgeführt wurden. Substrate wie Gülle bringen außerdem erhebliche hygienisch-gesundheitliche Probleme für die damit arbeitenden Personen und das Ökosystem See, das wenigstens einer eingeschränkten menschlichen Nutzung zugeführt werden soll.

Die für fließende acid mine drainage konzipierten Durchflußreaktoren arbeiten gut, sind aber auf bereits bestehende saure Seen nicht oder nur mit hohem technischem Aufwand anwendbar. Generell haben ex situ-Verfahren den Nachteil, daß sie energieaufwendig und damit teuer sind. An manchen Standorten sind sie gar nicht realisierbar (fehlende Aufstellfläche, fehlende oder nicht installierte Stromanschlüsse, Wartungsarbeiten schwierig wegen fehlender Infrastruktur). Hinzu kommt der Anfall an Sulfidschlamm, der Entsorgungsprobleme bereitet.

Ein in situ-Verfahren zur Verringerung des Sulfat- und Säuregehaltes von Wässern in Abraumkippen wird in DE 41 06 781 A1 vorgeschlagen. Das Verfahren sieht die Einbringung von Klärschlämmen und/oder Abschlämmen aus der Zuckerrübenherstellung als Nährstoffe für sulfatreduzierende Bakterien vor.

Aufgabe der Erfindung war es, ein Verfahren zur mikrobiellen Sanierung von schwefelsauren Restseen des Braunkohlentagebaus zur Verfügung zu stellen, das die bakterielle in situ-Sulfatreduktion nutzt und neben der Entfernung von Sulfat, Eisen und anderen Schwermetallen eine vollständige Neutralisation gewährleistet.

Überraschenderweise wurde nun gefunden, daß die erfindungsgemäße Aufgabe durch den kombinierten Einsatz von Carbonatationsschlamm als Substrat und Stroh als Besiedlungsfläche für die Bakterien und als Nahrungsquelle gelöst werden kann. Es hat sich gezeigt, daß durch die genannte Kombination im Vergleich zu den Einzelkomponenten ein synergistischer Effekt erzielt wird, der sich in einer schnellen und vollständigen Neutralisierung ausdrückt. Je nach vorgefundener Situation kann die Zugabe von Stroh und Carbonatationsschlamm einmalig oder mehrmalig in größeren Zeitabständen erfolgen.

Durch die erfindungsgemäße technische Lösung sind der technische Aufwand vor Ort und die Störanfälligkeit minimal. Da das Substrat nicht quantitativ zur chemischen Neutralisierung eingesetzt wird, sondern den Mikroorganismen als "Starthilfe" dient, sind geringere Mengen als bei einer konventionellen Kalkung erforderlich. Der Carbonatationsschlamm führt durch seinen Carbonatanteil zu einer sofortigen lokalen Erhöhung des pH-Wertes, wodurch die säureempfindlichen Sulfatreduzierer schnell und zuverlässig aktiviert werden. Die zusätzlich enthaltenen anorganischen Nährstoffe gewährleisten eine gute Versorgung der Mikroorganismen auch an oligotrophen Standorten.

Das erfindungsgemäße Verfahren funktioniert also nicht nur stöchiometrisch, sondern es wird offensichtlich durch den sich einstellenden Nährstoff- bzw. Energiekreislauf eine Selbstreinigung initiert. Durch die anfängliche pH-Wertanhebung und die biologisch nutzbaren Nährstoff- bzw. Energielieferanten, die mit dem Verfahren eingebracht werden, können sich Algen und andere Kleinstlebewesen (Plankton, Neston) entwickeln, die nach ihrem Absterben Nährstoff- bzw. Energiequellen für den gesamten See darstellen.

Bei dem erfindungsgemäß eingesetzten Carbonatationsschlamm handelt es sich um den üblichen, auch als Scheideschlamm bezeichneten, unlöslichen Rückstand, der bei der Rübenzuckerproduktion im Ergebnis der Carbonatation mit einem Trockenrückstand von ungefähr 70% anfällt und normalerweise als Düngemittel dient. Er enthält ca. 65% CaCO₃, 1-2% P₂O₅, 0,2-0,5% N und etwas Kali.

Nachfolgend soll die Erfindung an einem Ausführungsbeispiel näher erläutert werden:

### Ausführungsbeispiel:

Das als Aufwuchsträger und langsam abbaubare Kohlenstoffquelle eingesetzte Stroh stammt aus biologischem Anbau, um ggf. einen Eintrag von Pflanzenschutzmittel-Rückständen zu vermeiden. Der Carbonatationsschlamm stammt aus einer üblichen Zuckerfabrik in Deutschland.

Die Exmperimente wurden in Duran® -Borosilikatglassäulen der Jenaer Glaswerk GmbH durchgeführt. Der obere Säulenabschnitt ist plan mit einem PVC-Deckel verschlossen. Der untere Säulenabschnitt besitzt einen runden plan angeschmolzenen Boden. Eine einzelne Säule hat die Nennweite DN 300, ist 150 cm hoch und in 20 cm Höhe oberhalb des unteren Bodens zweigeteilt. Die einzelnen Säulenabschnitte sind untereinander mit einem Bundflanschsystem verbunden und mit PTFE gedichtet. 5 Stutzen der Größe GL 18 sind auf Säulenhöhe 30, 40, 60 und 120 cm oberhalb der lösbaren Flanschverbindung angebracht. Sie werden mit Schraubverbindungskappen aus ETFE und PTFE-beschichteten Butylgummidichtungen verschlossen. Die Säulen wurden oberhalb einer Auffangwanne in einem lösbaren und erweiterbaren Montagegestell aus Edelstahl montiert.

Für die Experimente wurde Sediment und Wasser aus dem Nordbecken des Restloches 111 im Lausitzer Braunkohlerevier/Deutschland entnommen. Die Seetiefe beträgt dort 7,5 m, das Sediment ähnelte farblich oxidischen Sedimenten, die reich an Goethit und Fe(III)-hydroxosulfaten sind und wies keine Anzeichen für in situ stattfindende Sulfatreduktion auf. Das Sediment wurde mit einem Birge-Ekman-Bodengreifer entnommen, in einem HDPE-Faß homogenisiert und bis zur Verwendung kühl gelagert. Das Wasser wurde mit einer Schlauchpumpe aus einer Tiefe von 6 m gefördert und ebenfalls in HDPE-Fässern kühl zwischengelagert.

Am folgenden Tag wurde jede Säule mit 14,8 ± 0,3 kg Frischsediment und 88 Litern Seewasser befüllt.

Nach dem Befüllen der Säulen wurde über zwei getrennte externe Thermostatensysteme eine Temperatur von 10 ± 0,2°C eingestellt. Im Anschluß wurden die Säulen mit Moosgummi isoliert, wodurch der Inhalt gleichzeitig dunkel gehalten wurde. Dann wurde dem Versuchssystem 3 Wochen Zeit gelassen, ein Gleichgewicht einzustellen, so daß die Startbedingungen der Säulen möglichst ähnlich waren. Mit Beginn der Experimente durch Zugabe von Substraten und Stroh wurde eine künstliche Temperaturschichtung ähnlich der eines Sees erzwungen. Vom Säulenboden bis zu einer Höhe von 60 cm wurde eine Temperatur von 10 ± 0,2°C eingestellt; von 90 bis 110 cm Höhe wurde eine Temperatur von 20 ± 0,2°C.

Der Carbonatationsschlamm (295 g) wurde über dem Sediment eingebracht. Danach wurde das Stroh (660 g) als fester Kranz zugegeben und kurz über dem Sediment fixiert. Schon nach kurzer Zeit (8 Wochen) entwickelte sich eine Zone über dem Sediment der mit Carbonatationsschlamm und Stroh beaufschlagten Säule, und die Neutralisierung schritt vom Sediment aus nach oben fort. Zum Vergleich wurde die zeitliche Entwicklung der pH-Werte für 4 Versuchssäulen festgestellt (Kontrollsäule: nur Wasser und Sediment, Säule nur mit Stroh, Säule nur mit Carbonatationsschlamm und erfindungsgemäße Säule mit Kombination von Carbonatationsschlamm und Stroh).

Aus den Messungen ergab sich, daß die Wirkung von Carbonatationsschlamm in Kombination mit Stroh die additive Wirkung der beiden Einzelsubstrate überstieg. Die Daten zum Verlauf von O₂ und Eh bestätigen diesen Trend. Sulfat, Eisen und Schwermetalle wurden ebenfalls regelmäßig analysiert, ihre Abnahme zeigt über den Anstieg des pH-Wertes hinaus eine Verbesserung der Wasserqualität an.

## Patentansprüche

1. Verfahren zur mikrobiellen in-situ Sanierung von schwefelsauren Restseen des Braunkohlentagebaus unter Ausnutzung der bakteriellen Sulfatreduktion,
**dadurch gekennzeichnet, daß**
die Sanierung durch Zusatz von in der Rübenzuckerproduktion anfallendem Carbonatationsschlamm und Stroh durchgeführt wird.

## Claims

1. A process for the microbial *in situ* cleaning of brown coal strip mining residual pools containing sulfuric acid, using bacterial sulfate reduction,
**characterized in that**
cleaning is performed by adding carbonatation sludge obtained in beet sugar production and straw.

## Revendications

1. Procédé d'assainissement microbien in-situ des eaux résiduelles contenant de l'acide sulfurique des mines de lignite à ciel ouvert effectué en utilisant des bactéries sulfatoréductrices,
**caractérisé en ce que**
l'assainissement s'effectue par un ajout d'écume de carbonatation produite au cours de la production de sucre de betteraves et de paille.
